# EUROPEAN PATENT SPECIFICATION

(11) **EP 3 857 856 B1**
(45) Date of publication and mention of the grant of the patent: **24.01.2024**
(21) Application number: 19942354.2
(22) Date of filing: 19.08.2019
(51) Int. Cl.: H04L 9/40, B60L 53/30, B60L 53/65, B60L 53/66, H04W 12/069, H04W 12/02, H04L 67/12, H04W 12/108

(54) **SYSTEM AND METHOD FOR AUTHENTICATING COMMUNICATIONS BETWEEN A VEHICLE, A CHARGING STATION AND A CHARGING STATION MANAGEMENT SERVER**
SYSTEM UND VERFAHREN ZUR AUTHENTIFIZIERUNG DER KOMMUNIKATION ZWISCHEN EINEM FAHRZEUG, EINER LADESTATION UND EINEM LADESTATIONSVERWALTUNGSSERVER
SYSTÈME ET PROCÉDÉ D'AUTHENTIFICATION DE COMMUNICATION ENTRE UN VÉHICULE, UNE STATION DE CHARGE ET UN SERVEUR DE GESTION DE STATION DE CHARGE

(43) Date of publication of application: 04.08.2021
(73) Proprietor: Huawei Technologies Co., Ltd., Shenzhen Guangdong 518129 (CN)
(72) Inventor: YASMIN, Rehana, 17-08 138589 (SG); YANG, Yanjiang, 17-08 138589 (SG); WEI, Zhuo, 17-08 138589 (SG); SHA, Qingdi, Shenzhen, Guangdong 518129 (CN)
(74) Representative: Goddar, Heinz J.
(86) International application number: PCT/CN2019/101300
(87) International publication number: WO 2021/031061

(56) References cited:
- CN-A- 105 450 623
- US-A1- 2015 113 275
- US-A1- 2015 202 975
- US-A1- 2019 054 835
- Zhao Tianyu; Zhang Chi; Wei Lingbo; Zhang Yanchao: "A secure and privacy-preserving payment system for Electric vehicles", 2015 IEEE International Conference on Communications (ICC), IEEE, 8 June 2015 (2015-06-08), pages 7280-7285, XP033199585, DOI: 10.1109/ICC.2015.7249489

## Description

### Field of the Invention

This invention relates to a system and method for authenticating communication between a vehicle, a Charging Station (CS) and a Charging Station Management Server (CSMS). In particular, the invention utilizes complex Public Key Infrastructure (PKI) mechanisms to establish strong and secure communication mechanisms between the vehicle and the charging station management server and between the charging station and the charging station management server, while lightweight authentication is used for establishing communications between the vehicle and the charging station when a Controller Area Network (CAN) cable is used to transfer data between the vehicle and the charging station.

### Summary of the Prior Art

A vehicle that uses one or more electric motors for propulsion is commonly identified in the art as an electric vehicle (EV). An electric vehicle may be powered by self-contained batteries that have to be periodically recharged once its stored energy has been depleted. Modern internal combustion engines have been the dominant propulsion method for motor vehicles throughout these years, but due to recent technological developments and an increased focus on renewable energy, there is resurgence in the demand for electric vehicles.

When an electric vehicle (EV) is to be recharged, the EV may be recharged at private or public charging stations (CS). When a public charging station is used, payment will have to be made for the electricity consumed by the vehicle. Payment for the electricity consumed may be done on the spot, or may be via contract based payment (plug and charge) methods. Payment on the spot methods include payment via cash, credit card, prepaid card, mobile app or any other modes and this is done right after charging is completed. Conversely, in a contract based payment arrangement, an EV user will pre-purchase a power contract from a charging spot operator (CSO) to charge their EV from charging stations operated by that particular CSO. The ISO 15118 international standard adopted for bi-directional charging/discharging of electric vehicles identifies this mode as the Plug and Charge mode. In the plug and charge mode, charging starts once the EV user plugs the cable into their EV and take place without any further human interaction. The EV user then leaves after the charging session is completed without paying for the charging on the spot. Instead, the EV user will receive a bill at the end of the month for charging sessions incurred during the whole month. In such a scenario, EV users can only charge from those charging stations provided by its contractual partner.

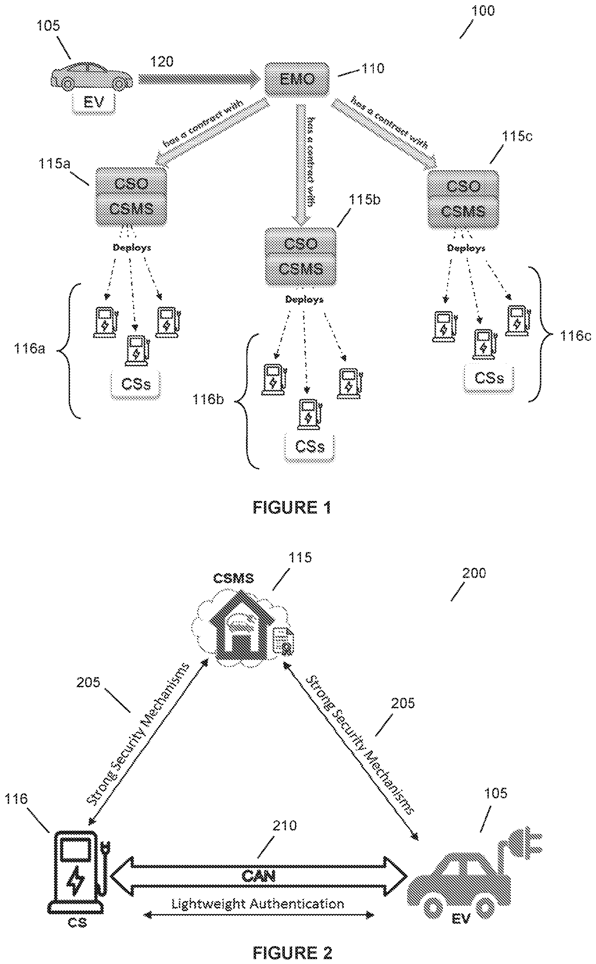

In another scenario, an EV user may be allowed to charge from any charging station, operated by any CSO under the same entity, i.e. an Electric Mobility Operator (EMO). In this scenario, the EV user buys a power contract from the EMO rather than a CSO. The billing is subsequently handled via the EV user's contractual partner, i.e., EMO in this case. The EMO plays an intermediary role between the EV user and different CSOs to settle payments between them. Figure 1 illustrates an eRoaming enabled Plug and Charge Electric Mobility System that is known in the art. In particular, eRoaming refers to a market model that has been adopted by electric mobility users whereby contractual relationships are established between the various market participants to allow the users to charge their vehicles at all participating charging stations. The users are then only subsequently billed by the user's own contractual partner and not the owner of the utilized charging stations. In system 100, electric vehicle 105 has signed a charging contract with EMO 110 as such; electric vehicle 105 may now charge its batteries from any of the charging stations 116a, 116b and 116c that are operated by CSOs 115a, 115b and 115c that are associated with EMO 110.

There are several security and privacy issues that are encountered during the charging of an EV. For example, a malicious EV may attempt to charge from a CS without or with reduced payment by spoofing the identity of a legitimate EV, skimming energy from a legitimate charging session, repudiating a charging session later on and/or reuse a valid charging contract of an EV for several other EVs that are not included in the contract. Further, as personal data such as the vehicle identity of the EV, the charging location, charging time, etc. are disclosed and collected during the charging of the EV, all this collected data has to be handled carefully in order to ensure that a user's personals details are not erroneously disclosed to malicious parties.

Several communication protocols for EV charging (eCharging) that cover both modes of payment, i.e., payment on spot and contract based payment have been proposed by those skilled in the art. The solution that is to be adopted by an EV user depends on the communication medium used between the EV and the CS. The most commonly used communication medium between an EV and a CS in Europe is the Power-Line Communication (PLC) cable whereas in China, a Controller-Area-Network (CAN) cable is typically used as the communication medium between the EV and the CS. Unfortunately, the CAN cable has much lower bandwidth than the PLC cable thereby reducing the amount of data that may be sent between the EV and the CS. As such, eCharging communication protocols that utilize the CAN cable typically comprises protocols such as the Payment on Spot protocol which requires payment by cash, credit card, prepaid card, mobile app etc. once charging of the EV is completed. Such an exemplary payment system is set out as follows.

The EV's user first uses a mobile application to register the EV with a Charging Station Management System (CSMS). During the registration process, the user usually has to provide the CSMS with the user's personal information such as the user's phone number, national identity card number etc. After the one time registration, whenever the EV user wants to charge from a charging station associated with the CSMS, the user just has to scan a Quick Response (QR) code provided at the charging spot using the registered mobile application. The captured QR code together with the user's registration details are then sent to the CSMS for authentication. After successful authenticating the charging request, the user then sends a charging command to the CSMS using the mobile application. This command is then forwarded to the charging spot by the CSMS. At the end of the charging session, the CSMS sends a bill to the user who pays this bill via various payment means such as WeChat or Alipay.

In this proposed payment method, the EV user has to manually initiate payment at the end of each charging session. However, there is the possibility that the EV user may leave the charging spot without paying for the energy consumed. Moreover, no direct authentication is implemented between the EV and CS to authenticate the identity of the EV's user. Only the communication that took place between EV user's mobile phone application and the CSMS was authenticated.

Another charging communication protocol that has been proposed by those skilled in the art that utilizes the CAN cable is the IEC standard (IEC 61851). However, this protocol doesn't handle payments between a CS and an EV and it also doesn't provide secure communications between the CS and the EV. Instead, it relies on another charging standard (ISO 15118: 1-2) to provide the secure charging communication protocol for plug and charge payment modes.

The most popular solution for plug and charge communication modes is the ISO standard (ISO 15118) which uses contract based payment methods. In this protocol, the EV user buys a charging contract from the Electric Mobility Operator (EMO) to charge their EV using charging stations deployed by more than one Charging Spot Operator (CSO). The EMO later settles payment between the EV user and CSOs. The advantage of this ISO 15118 standard is that a secure communication protocol is provided however, this standard is typically implemented on communication mediums that have sufficiently large bandwidths to handle the large amounts of data that are transferred between devices and an example of such a communication medium would be the PLC cable. For this protocol, the EV's user first obtains a signed charging contract certificate from the EMO together with the corresponding private/secret key. Later on, whenever the EV has to charge, the EV and CS exchange their identities after the cable has been plugged into the EV. Their signed certificates are then exchanged together with certificate chains for authentication. After the exchanged certificates have been verified, a secure session is established between the two, and the EV then sends its signed charging contract certificate to the CS together with the certificate chain. The CS then verifies the certificate and sends a challenge to the EV to be signed by EV using the secret key associated with the charging certificate to ensure that the EV has corresponding secret key. The EV then signs the challenge and sends the signed challenge back to the CS who after verifying the signed challenge then starts charging the plugged in EV. Once charging has been completed, the CS then sends meter readings to the EV which are signed by the EV and sent back to the CS. At the end of the charging session, the CS then sends signed meter readings to the CSMS and also to the EMO for billing purposes.

Existing CAN cable based approaches only focuses on the "payment on spot methods" and does not provide secure solutions for plug and charge scenario while existing plug and charge standards only provide a solution for the PLC cable based charging approach. The CAN cable's bandwidth is much lower than the bandwidth of a PLC cable as such, a complex Public-Key-Infrastructure (PKI) based solution (such as ISO 15118) is not suitable for use with a CAN cable. Hence, it is not practical to exchange signed certificates and certificate chains between the EV and the CS via the CAN cable.

For the above reasons, those skilled in the art are constantly striving to come up with a system and method for establishing secure Plug and Charge (contract based payment) EV communication protocols between an EV and a CS whereby the protocol is sufficiently lightweight so that it is suitable to be implemented on a CAN cable thereby reducing the communication overhead between the EV and the CS.

Zhao et al.: "A secure and privacy-preserving payment system for Electric vehicles", 2015 IEEE International Conference on Communications (ICC), IEEE, 8 June 2015, discloses a privacy-preserving payment system with reservation service for EVs using CL signature and TPM technique.

US 2019/054835 A1 discloses a charging method of electric vehicle applied in charging station for electric vehicle. A control host provided at the charging station (local end) firstly determining whether it being in connecting state with the remote server or not, and then judging it being in off-line state with the remote server, the control host verifies whether the user has been authorized to use the charging apparatus of the charging station or not according to the authentication information provided by the user.

### Summary of the Invention

The above and other problems are solved and an advance in the art is made by systems and methods provided by embodiments in accordance with the invention.

A first advantage of embodiments of systems and methods in accordance with the invention is that a secure Plug and Charge (contract based payment) EV communication protocol is established between an EV and a CS whereby the protocol is sufficiently lightweight so that it is suitable to be implemented on a CAN cable.

A second advantage of embodiments of systems and methods in accordance with the invention is that lightweight credentials are computed for the EV at the time of charging and these lightweight credentials are used to authenticate communications between the EV, the CS and the CSMS.

A third advantage of embodiments of systems and methods in accordance with the invention is that as the Plug and Charge protocol is adopted, payment on the spot is not required and the bill is sent to the EV user in accordance with the charging contract signed between the user and the CSMS.

The above advantages are provided by embodiments of a system in accordance with the invention operating in the following manner.

The invention provides a system of claim 1, and a method of claim 8. Further emobdiments are disclosed in the dependent claims.

### Brief Description of the Drawings

The above advantages and features in accordance with this invention are described in the following detailed description and are shown in the following drawings:
Figure 1 illustrating a block diagram representative of an existing eRoaming enabled Plug and Charge Electric Mobility system;
Figure 2 illustrating a block diagram representative of a communication authentication system between an electric vehicle, a charging station and a charging station management system in accordance with embodiments of the invention;
Figure 3 illustrating a block diagram representative of components in an electronic device or module for implementing embodiments of the invention;
Figure 4 illustrating a timing diagram for establishing secure charging communication protocols between an electric vehicle, a charging station and a charging station management system in accordance with a first embodiment of the invention;
Figure 5 illustrating a timing diagram for establishing secure charging communication protocols between an electric vehicle, a charging station and a charging station management system whereby the lightweight authentication code is computed at the electric vehicle in accordance with a second embodiment of the invention;
Figure 6 illustrating a timing diagram for establishing secure charging communication protocols between an electric vehicle, a charging station and a charging station management system in accordance with a third embodiment of the invention;
Figure 7 illustrating a timing diagram for establishing secure charging communication protocols between an electric vehicle, a charging station and a charging station management system whereby the lightweight authentication code is computed at the electric vehicle in accordance with a third embodiment of the invention;
Figure 8 illustrating a timing diagram for establishing secure charging communication protocols between an electric vehicle, a charging station and a charging station management system in accordance with a fourth embodiment of the invention; and
Figure 9 illustrating a timing diagram for establishing secure charging communication protocols between an electric vehicle, a charging station and a charging station management system whereby the lightweight authentication code is computed at the electric vehicle in accordance with a fourth embodiment of the invention.

### Detailed Description

This invention relates to a system and method for authenticating communication between a vehicle, a charging station and a charging station management server. In particular, the invention utilizes complex Public Key Infrastructure (PKI) mechanisms to establish strong and secure communication mechanisms between the vehicle and the charging station management server and between the charging station and the charging station management server, while lightweight authentication is used for establishing communications between the vehicle and the charging station whereby a Controller Area Network (CAN) cable is used to transfer the lightweight authentication code between the vehicle and the charging station.

Figure 2 illustrates a block diagram representative of a communication authentication system between an electric vehicle, a charging station and a charging station management system in accordance with embodiments of the invention. System 200 comprises electric vehicle (EV) 105, charging station (CS) 116 and charging station management system (CSMS) 115. One skilled in the art will recognize that CSMS 115 may comprise of any electronic or computing device that is able to perform computing functions and transfer data wirelessly or through wired means to other computing devices. EV 105 is also provided with an authentication device or vehicle module (not shown) that is configured to handle EV 105's external communications with telecommunication devices provided in CS 116, CSMS 115 and any other devices which may be within its range. One skilled in the art will recognize that when reference is made in this description to communications that take place between EV 105 and other devices, it will be the authentication device provided within EV 105 that is performing all the necessary processing steps for the transfer of data and/or information to occur between the various devices.

Communication 210 between CS 116 and EV 105 takes place using a Controller Area Network (CAN) cable and communication 210 between CS 116 and EV 105 is usually established when the charging station's charger is plugged into EV 105. Communication 205 between CSMS 115 and EV 105 and between CSMS 115 and CS 116 may take place via standard wireless or wired communications means such as, but are not limited to, Wireless-Fidelity (Wi-Fi), Bluetooth, Near Field Communication (NFC), cellular networks, satellite networks, telecommunication networks, Wide Area Networks (WAN) and etc. as long as these communication means have sufficient bandwidth to handle the exchange of the secure communication mechanisms between these devices.

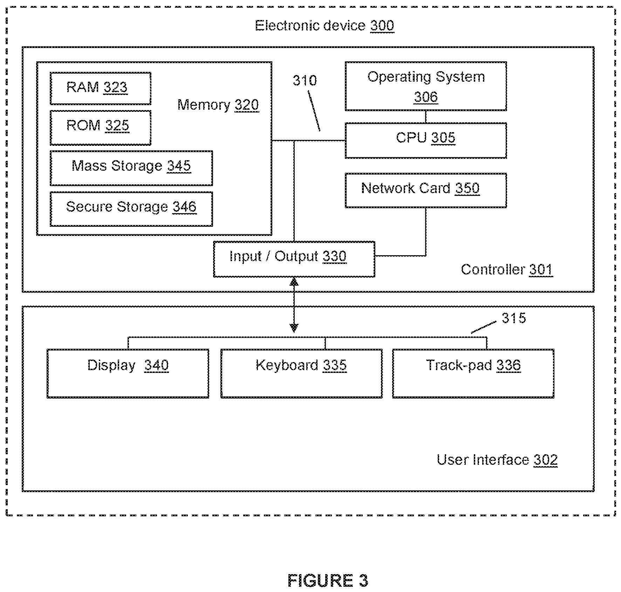

Figure 3 illustrates a block diagram representative of components of an electronic device 300 that is provided within CSMS 115, EV 105, CS 116 and the vehicle module contained within EV 105 for implementing embodiments in accordance with embodiments of the invention. One skilled in the art will recognize that the exact configuration of each electronic device provided within the entities or the server may be different and the exact configuration of electronic device 300 may vary and Figure 3 is provided by way of example only.

In embodiments of the invention, device 300 comprises controller 301 and user interface 302. User interface 302 is arranged to enable manual interactions between a user and electronic device 300 and for this purpose includes the input/output components required for the user to enter instructions to control electronic device 300. A person skilled in the art will recognize that components of user interface 302 may vary from embodiment to embodiment but will typically include one or more of display 340 that may be touchscreen enabled, keyboard 335 and track-pad 336.

Controller 301 is in data communication with user interface 302 via bus 315 and includes memory 320, Central Processing Unit (CPU) 305 mounted on a circuit board that processes instructions and data for performing the method of this embodiment, an operating system 306, an input/output (I/O) interface 330 for communicating with user interface 302 and a communications interface, in this embodiment in the form of a network card 350. Network card 350 may, for example, be utilized to send data from electronic device 300 via a wired or wireless network to other processing devices or to receive data via the wired or wireless network. Wireless networks that may be utilized by network card 350 include, but are not limited to, Wireless-Fidelity (Wi-Fi), Bluetooth, Near Field Communication (NFC), cellular networks, satellite networks, telecommunication networks, Wide Area Networks (WAN) and etc.

Memory 320 and operating system 306 are in data communication with CPU 305 via bus 310. The memory components include both volatile and non-volatile memory and more than one of each type of memory, including Random Access Memory (RAM) 320, Read Only Memory (ROM) 325 and a mass storage device 345, the last comprising one or more solid-state drives (SSDs). Memory 320 also includes secure storage 346 for securely storing secret keys, or private keys. It should be noted that the contents within secure storage 346 are only accessible by a super-user or administrator of device 300 and may not be accessed by any user of device 300. One skilled in the art will recognize that the memory components described above comprise non-transitory computer-readable media and shall be taken to comprise all computer-readable media except for a transitory, propagating signal. Typically, the instructions are stored as program code in the memory components but can also be hardwired. Memory 320 may include a kernel and/or programming modules such as a software application that may be stored in either volatile or non-volatile memory.

Herein the term "CPU" is used to refer generically to any device or component that can process such instructions and may include: a microprocessor, microcontroller, programmable logic device or other computational device. That is, CPU 305 may be provided by any suitable logic circuitry for receiving inputs, processing them in accordance with instructions stored in memory and generating outputs (for example to the memory components or on display 340). In this embodiment, CPU 305 may be a single core or multi-core processor with memory addressable space. In one example, CPU 305 may be multi-core, comprising-for example-an 8 core CPU.

In the subsequent sections, for brevity, reference is made only to the interactions that take place between EV 105 and CSMS 115 and/or CS 116 but one skilled in the art will recognize that these interactions may be initiated by the vehicle module in EV 105 or any other similar devices without departing from this invention.

### Secure Electric Vehicle (EV) Plug-and-Charge Communication Protocol whereby the credential is computed at the Charging Station Management Server (CSMS)

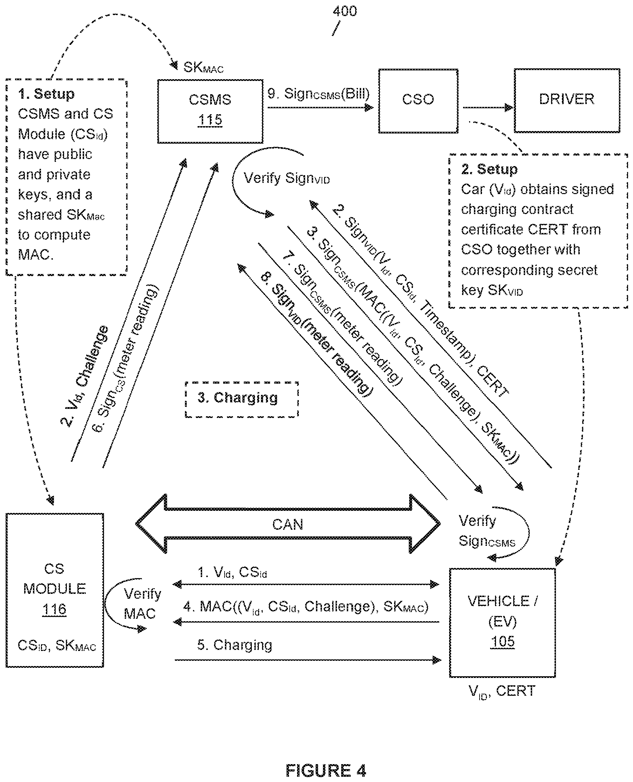

In this embodiment of the invention, prior to charging EV 105 that has an identity V_{ID}, an authentication device provided at EV 105 will first obtain a signed charging contract certificate, CERT, from a charging spot operator (CSO) associated with CSMS 115 together with a secret key SK_{VID} corresponding to the charging certificate, CERT. A public key PSK_{VID} that is associated with the secret key SK_{VID} will also be made known to all parties of the contract such as CSMS 115 and EV 105. CS 116 having an identity CS_{ID} and CSMS 115 will both have their associated long term Public-Key-Infrastructure (PKI) public and private keys and would have been provided with the corresponding signed certificates. CSMS 115 and CS 116 will each also be provided with a secret key SK_{MAC} that has been pre-shared between CSMS 115 and CS 116 to compute credentials for communications between CS 116 and EV 105. The steps described above are illustrated as Setup-steps 1 and 2 in Figure 4.

When a charging cable from CS 116 is plugged into EV 105, the charging communication protocol illustrated in system 400 will begin, and the authentication device provided at EV 105 will transmit its charging identity to CS 116 using the CAN cable. For brevity, although reference is made to EV 105 in the subsequent sections, one skilled in the art will recognize that it is the authentication device provided within EV 105 that is carrying out all the necessary processing steps. In embodiments of the invention, the charging identity associated with CS 116 may comprise identity V_{Id}. In other embodiments of the invention, at this step, EV 105 and CS 116 may both exchange their identities V_{ID} and CS_{ID} using the CAN cable. This takes place at step 1.

At step 2, EV 105 will generate and send an authentication device signed identity message together with its charging contract certificate, CERT, to CSMS 115. The authentication device signed identity message is generated based on the vehicle identity V_{ID} and the charging station identity CS_{ID} and is signed using the secret key SK_{VID}. In embodiments of the invention, the authentication device signed identity message may also contain a timestamp of the message or any other similar information without departing from the invention. Simultaneously, at step 2, CSMS 115 will also receive the charging identity or vehicle identity of EV 105 V_{ID} and a challenge value for the vehicle identity V_{ID} from CS 116.

CSMS 115 will verify the authentication device signed identity message and charging contract certificate received from EV 105 using the authentication information associated with the charging contract certificate, i.e. using a public key PSK_{VID} that is associated with the secret key SK_{VID} and this information may be contained within the signed charging contract certificate, CERT. After successfully verifying the authentication device signed identity message, CSMS 115 then computes a CSMS signed message for EV 105 using the secret key SK_{MAC} that was pre-shared with CS 116. The CSMS signed message may comprise a signed Message Authentication Code (MAC) value that is computed by applying a MAC algorithm with the secret key SK_{MAC} to the vehicle identity V_{ID} (as received from CS 116 at step 2), the charging station 116's identity CS_{ID} and the challenge value (as received from CS 116 at step 2). The MAC value may then be signed using the PKI-Private key associated with CSMS 115 to produce the signed-MAC value. CSMS 115 then sends the CSMS signed message to EV 105 at step 3.

EV 105 first verifies the authenticity of the signature of the CSMS signed message, i.e. the signed-MAC value, as received from CSMS 115 using a PKI-Public key associated with CSMS 115. Upon successfully authenticating the CSMS signed message, only the MAC value is then sent by EV 105 to CS 116 at step 4 using the CAN cable.

CS 116 then verifies the MAC value received from EV 105 using the key SK_{MAC} that was pre-shared between CS 116 and CSMS 115. The verification may be performed by CS 116 computing a MAC value that is then compared with the MAC value received from EV 105. This is done by applying a MAC algorithm with the secret key SK_{MAC} to the the vehicle identity V_{ID}, CS 116's identity CS_{ID} and the challenge value. If the MAC value computed by CS 116 matches the MAC value received from EV 105, this means that the EV 105 plugged into CS 116 has been successfully authenticated and hence the charging will start. The charging occurs at step 5.

At the end of the charging session, CS 116 signs meter readings using a PKI-Private key associated with CS 116 and sends the CS signed meter readings to CSMS 115 at step 6. CSMS 115 then authenticates the CS signed meter readings using the PKI-Public key associated with CS 116 and once authenticated; signs the meter reading using a PKI-Private key associated with CSMS 115. The newly CSMS signed meter reading is then sent to EV 105 for its record at step 7 and to a charging spot operator (CSO) for billing purposes.

In accordance with embodiments of the invention, the CSMS signed meter reading received by EV 105 may be authenticated using a PKI-Public key associated with CSMS 115. The meter readings may then be further signed by the authentication device provided at EV 105 using the secret key SK_{VID} and once signed, be sent back to CSMS 115 for further processing at step 8. The authentication device signed meter readings are then forwarded onto the CSO by CSMS 115 to be recorded at the CSO whereby the CSO authenticates the authentication device signed meter readings using the public key PSK_{VID} and the PKI-Public key associated with CSMS 115.

### Secure Electric Vehicle (EV) Plug-and-Charge Communication Protocol whereby the credential is computed at the EV.

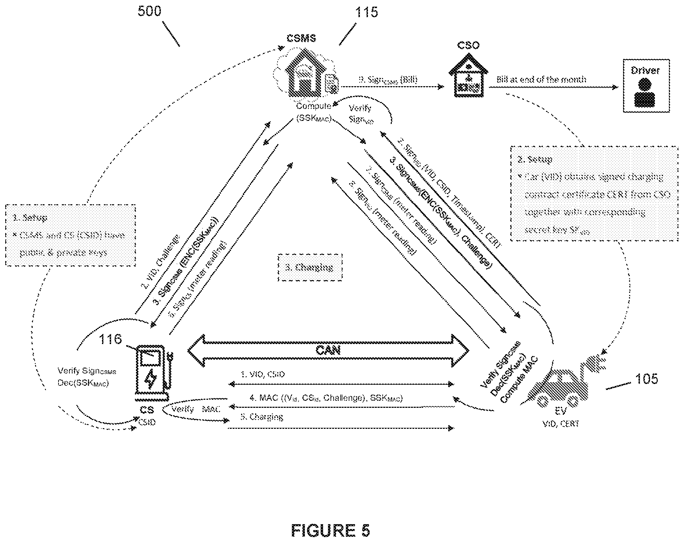

In accordance with a second embodiment of the invention, prior to charging EV 105, EV 105 having a charging identity or an identity V_{ID} will first obtain a signed charging contract certificate CERT from a charging spot operator (CSO) associated with CSMS 115 together with a secret key SK_{VID} corresponding to the charging certificate. A public key PSK_{VID} that is associated with the secret key SK_{VID} will also be made known to all parties of the contract such as CSMS 115 and EV 105. CS 116 having an identity CS_{ID} and CSMS 115 will both have their associated long term Public-Key-Infrastructure (PKI) public and private keys and would have been provided with the corresponding signed certificates. The steps described above are illustrated as setup-steps 1 and 2 in Figure 5.

When a charging cable from CS 116 is plugged into EV 105, the charging communication protocol illustrated in system 500 will begin, and EV 105 will provided its charging identity to CS 116 using the CAN cable. In embodiments of the invention, when the charging cable is plugged into EV 105, EV 105 and CS 116 will both exchange their identities V_{ID} and CS_{ID} using a Controller Area Network (CAN) cable. This takes place at step 1.

At step 2, EV 105 will generate and send an authentication device signed identity message together with its charging contract certificate to CSMS 115. The charging request is generated based on the vehicle identity V_{ID} and the charging station identity CS_{ID} and is signed using the secret key SK_{VID}. In embodiments of the invention, the authentication device signed identity message may also contain a timestamp of the message or any other similar information without departing from the invention. Simultaneously, at step 2, CSMS 115 will also receive the vehicle identity of EV 105 V_{ID} and a challenge value for the vehicle identity V_{ID} from CS 116.

CSMS 115 will verify the authentication device signed identity message and charging contract certificate received from EV 105 using the authentication information associated with the charging contract certificate, i.e. using a public key key PSK_{VID} that is associated with the secret key SK_{VID} and this information may be contained within the signed charging contract certificate. After successfully verifying the authentication device signed identity message, CSMS 115 will then compute a shared secret key SSK_{MAC} for both EV 105 and CS 116.

The shared secret SSK_{MAC} is then encrypted by CSMS 115 using the long term PKI-public key of EV 105 and together with the challenge value it received from CS 116 in step 2, these two variables are then signed using a PKI-Private key associated with CSMS 115 to produce CSMS signed message. The CSMS signed message is then transmitted to EV 105.

Similarly, the shared secret SSK_{MAC} is then encrypted by CSMS 115 using the long term PKI-public key of CS 116 and is signed using a PKI-Private key associated with CSMS 115 to produce a CSMS signed shared secret. The CSMS signed shared secret is then transmitted to CS 116. This takes place at step 3.

In short, CS 116 and EV 105 will obtain the shared secret key SSK_{MAC} by decrypting their corresponding received encrypted messages using their own PKI-Private keys once the received CSMS signed message and CSMS signed shared secret have been validated using the PKI-Public key of CSMS 115.

In another embodiment of the invention, instead of using the PKI keys to encrypt the shared secret key SSK_{MAC}, CSMS 115 may pre-establish session keys with EV 105 and with CS 116 respectively and use these session keys to encrypt the shared secret key SSK_{MAC}. In this embodiment, EV 105 and CS 116 will then decrypt the encrypted shared secret key SSK_{MAC} using their respective session keys.

Once EV 105 and CS 116 both have obtained the shared secret key SSK_{MAC}, EV 105 then uses this shared secret key SSK_{MAC} to compute the Message Authentication Code (MAC) value that is to be used by CS 116 to authenticate communications with EV 105. The MAC value may be computed by applying a MAC algorithm with the shared secret key SSK_{MAC} to the vehicle identity V_{ID} (as received from CS 116 at step 1), the charging station 116's identity CS_{ID} and the challenge value (as received from CS 116 at step 3). The MAC value is then sent using the CAN cable to CS 116 at step 4.

CS 116 then verifies the MAC value received from EV 105 using the shared secret key SSK_{MAC}. The verification may be performed by CS 116 computing a MAC value that is then compared with the MAC value received from EV 105. This is done by applying a MAC algorithm with the secret key SK_{MAC} to the vehicle identity V_{ID}, CS 116's identity CS_{ID} and the challenge value. If the MAC value computed by CS 116 matches the MAC value received from EV 105, this means that the EV 105 plugged into CS 116 has been successfully authenticated and hence the charging will start. The charging occurs at step 5.

At the end of the charging session, CS 116 signs meter readings using a PKI-Private key associated with CS 116 and sends the CS signed meter readings to CSMS 115 at step 6. CSMS 115 then authenticates the CS signed meter readings using a PKI-Public key associated with CS 116 and once authenticated; signs the meter reading using a PKI-Private key associated with CSMS 115. The new CSMS signed meter reading is then sent to EV 105 for its record at step 7 and to a charging spot operator (CSO) for billing purposes.

In accordance with embodiments of the invention, the CSMS signed meter reading received by EV 105 may be authenticated using a PKI-Public key associated with CSMS 115. The meter readings may then be further signed using the secret key SK_{VID} by EV 105 and once signed, be sent back to CSMS 115 as authentication device signed meter readings for further processing at step 8. The meter readings may then be forwarded onto the CSO by CSMS 115 to be recorded at the CSO once validated by CSMS 115 whereby the CSO authenticates the received CSMS signed meter readings using the public key PSK_{VID} and the PKI-Public key associated with CSMS 115.

### Secure Electric Vehicle (EV) Plug-and-Charge Communication Protocol whereby the Billing Entity comprises an Electric Mobility Operator (EMO).

In all the embodiments the role of EMO and CSO may be replaced by each other.

This third embodiment of the invention comprises a variation of the first and second embodiments whereby the role of the billing handling entity, i.e. the CSO, is replaced with an Electric Mobility Operator (EMO). In first two embodiments, the role of the billing handling entity is handled by the CSO. However, by having a contract with a CSO, an EV user can only charge from the charging spots deployed by that particular CSO, limiting the number of charging stations that may be used by the EV.

To allow an EV the option of charging from any charging spot operated by any CSO, the ISO 15118 standard introduced another logical entity in between the CSO and EV users, i.e. the Electric Mobility Operator (EMO). The EMO is an entity which plays the role of a middle man between an EV user and a CSO and settles payments between the EV user and multiple CSOs whereby the EV is only required to maintain one charging contract with the EMO, instead of a multitude of charging contracts with several CSOs.

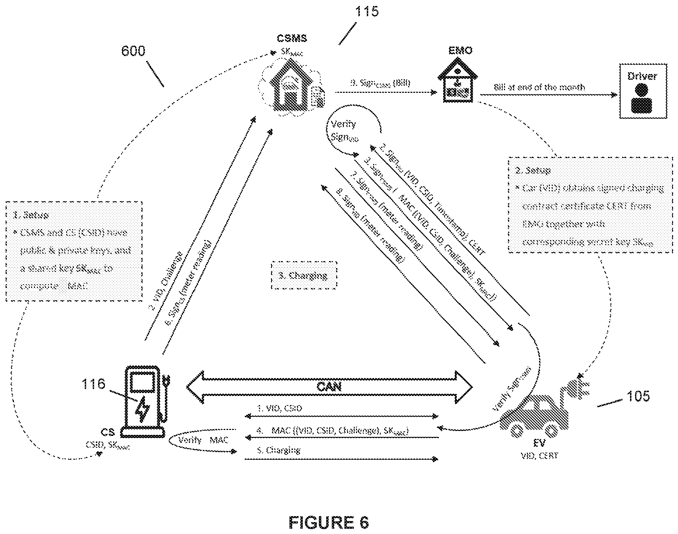

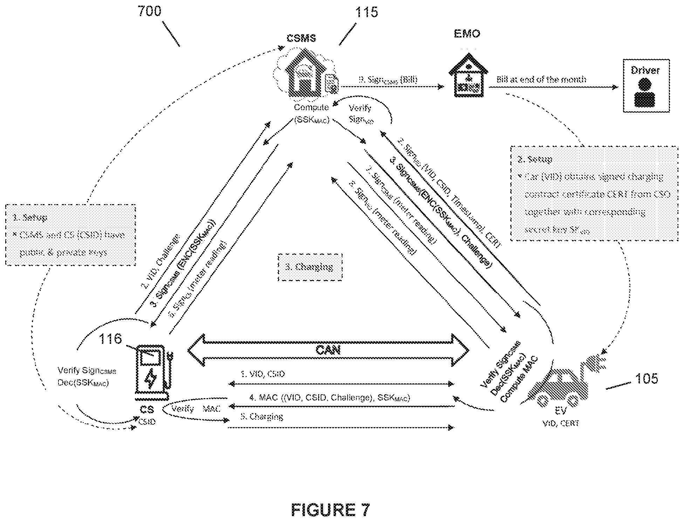

The EMO receives and handles bills from several charging stations operated by different CSOs and sends a single bill to the EV user at the end of the month. In this embodiment which is illustrated as system 600 in Figure 6 in relation to the first embodiment and illustrated as system 700 in Figure 7 in relation to the second embodiment, EV 105 obtains a signed charging contract certificate from an EMO together with the secret key SK_{VID} corresponding to the charging certificate, rather than from CSO 115.

### Secure Electric Vehicle (EV) Plug-and-Charge Communication Protocol whereby a Session Identity is used in place of the Vehicle and Charging Station Identities.

This fourth embodiment presents a privacy-preserving variant of the previously described embodiments. In the previous embodiments, EV 105 and CS 116 will exchange their respective identities (V_{ID}, CS_{ID}) using clear text or alternatively, EV 105 will provide its charging identity to CS 116 and the identity of EV 105 may be contained within the charging contract certificate, CERT, that has been previously provided to EV 105. This means that if this information is intercepted by malicious parties, the charging location, charging time, the personal details of the EV's user will be compromised. Moreover, in the third embodiment, as the role of the billing handling entity is handled by a third party, i.e. the EMO, a user's private information may be unnecessarily disclosed to others.

To preserve the EV user's privacy, the EMO only needs to know the charging meter readings/charging bill for each charging session conducted by an EV and does not need to know of the locations of CS 116 or the time CS 116 was used by EV 105. As for CSO/CSMS, it is sufficient that they are able to verify that the EV has a valid charging contract certificate from an EMO with a valid expiry date. The CSO/CSMS need not know the real identity of the EV's user etc. Therefore, in order to obfuscate the EV user's personal details from third parties, including CSO/CSMS, the current fourth embodiment presents privacy-preserving versions of the previous embodiments.

To achieve the objectives mentioned above, the vehicle identity V_{ID} of EV 105 is replaced with a session identity (S_{ID}). Each charging session will be linked with a unique session identity S_{ID} which will mask the actual identity of EV 105. However, the EV signature on both the charging request and the meter reading sent to CSMS 115 will still reveal the real identity of EV 105 to CSMS 115. In order to address this, in this embodiment of the invention, EV 105 will instead sign the charging request and meter readings using a group signature whereby CSMS 115 can verify the signature message by a cooresponding group public key .

When a group signature is used, a group of persons can sign a message anonymously on behalf of the group. In particular, through the use of the group signature protocol, (1) only the members of the group can sign a message; (2) the receiver of the signature can verify that it is a valid signature of that group, but cannot discover which member of the group has signed it; and (3) in the case of dispute, the signature can be opened by the group ownerto reveal the identity of the actual signer (actual group member who signed it). The group's owner is in-charge of adding group members and issuing signing keys, one unique signing key per member, to the group members and all the unique signing keys are associated with a single group public key. Hence, the signing key allows a group member to sign a message on behalf of the group and this signed message may be subsequently verified using the group public key. In case of disputes, the group owner has the ability to reveal the original signer. The main advantage of this approach is that the group signature provides the features of anonymity as well as unlinkability thereby ensuring that no one can link two different messages signed by the same group member together.

In this embodiment of the invention, only the EMO has access to the identity of the EV's user as the EMO requires this information for billing purposes. As such, the EMO will be the group owner and is in charge of computing and providing a group public key to associated EVs. Whenever an EV user buys a charging contract certificate from the EMO, the EMO then computes a group secret key GSK_{VID} for the new EV user whereby the signing key is associated with the group public key.

At the time of charging, the EV will sign the identity message and the meter reading using its own group secret key GSK_{VID}. The group secret key GSK_{VID} will enable the EV to produce the authentication device signed identity message, and the signed message may be verified using the group's public key that is shared/used by all the group's members (e.g. all EVs who buy charging contracts from this particular CSO or EMO).

The signature verifier, who is the CSMS in this case, only knows the identity of the group's owner (i.e., EMO), and not the details of each individual group member (i.e. signer EV). Successful verification of the charging request and charging certificate will ensure that the EV has a valid charging certificate from the EMO and that the EV possesses the group secret GSK_{VID} and hence; the EV will be allowed to proceed with charging at the CS.

At the end of the charging session, meter readings will be signed by the EV using the group secret key GSK_{VID} and sent to the CSMS. The CSMS will further sign these signed meter readings using the CSMS's PKI-Private Key and send the signed meter readings to the EMO. The EMO then verifies the further-signed meter reading using a PKI-Public key associated with the CSMS, rather than the CS's signature on received meter readings as the CS's signature enables the EMO to know the location of charging. The EMO then verifies the EV's group secret signature on the signed meter readings and being the group owner it can obtain the identity of signer EV for billing purposes.

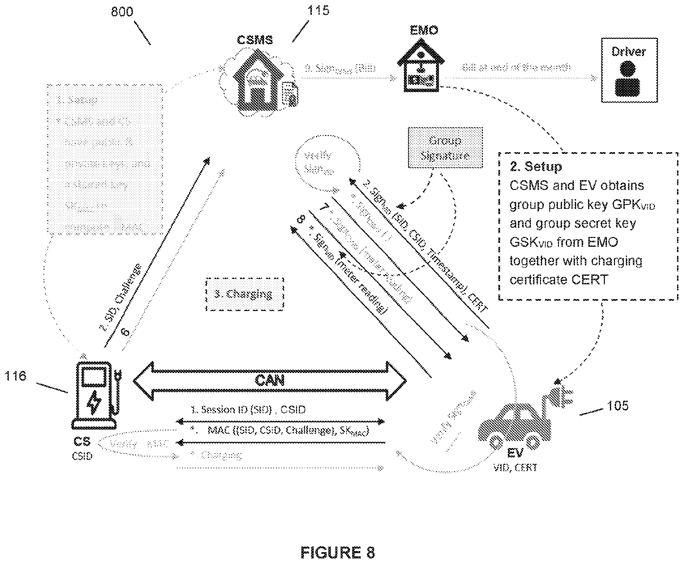

Figure 8 illustrates the application of the fourth embodiment of the invention to a Secure Electric Vehicle (EV) Plug-and-Charge Communication Protocol whereby the credential is computed at the Charging Station Management Server (CSMS), i.e. the first embodiment of the invention. Prior to charging EV 105, EV 105 having a charging identity such as, but not limited to, an identity V_{ID} will first obtain a signed charging contract certificate from a charging spot operator (CSO)/EMO associated with CSMS 115 together with a group secret key GSK_{VID} corresponding to the charging contract certificate whereby the group secret key GSK_{VID} is associated with the group public key of a group. EV 105 and may use the group secret key GSK_{VID} to sign messages on behalf of the group.

CSMS 115 and CS 116 having an identity CS_{ID} will both have their associated long term Public-Key-Infrastructure (PKI) public and private keys and would have been provided with the corresponding signed certificates. CSMS 115 and CS 116 will each also be provided with a secret key SK_{MAC} that has been pre-shared between CSMS 115 and CS 116 to compute credentials for communications between CS 116 and EV 105. The steps described above are illustrated as Setup-steps 1 and 2 in Figure 8.

When a charging cable from CS 116 is plugged into EV 105, the charging communication protocol illustrated in system 800 will begin, and EV 105 will transmit its charging identity to CS 116. In embodiments of the invention, when the cable is plugged into EV 105, a session identity (S_{Id}) will be transmitted to CS 116 from EV 105 and CS 116 will provide its identity CS_{ID} to EV 105 using a Controller Area Network (CAN) cable. This takes place at step 1.

At step 2, EV 105 will generate and send an authentication device signed identity message together with its charging contract certificate, CERT, to CSMS 115. The authentication device signed identity message is generated based on the session identity S_{Id} and the charging station identity CS_{ID} and is signed using the group secret key GSK_{VID}. In embodiments of the invention, the authentication device signed identity message may also contain a timestamp of the message or any other similar information without departing from the invention. Simultaneously, at step 2, CSMS 115 will also receive the session identity of EV 105 S_{ID} and a challenge value for EV 105 from CS 116.

CSMS 115 will verify the authentication device signed identity message and charging contract certificate, CERT, received from EV 105 using the authentication information associated with the charging contract certificate, i.e. using the group public key GPK_{VID}. After successfully verifying the authentication device signed identity message, CSMS 115 then computes a Message Authentication Code (MAC) value for EV 105 using the secret key SK_{MAC} that was pre-shared with CS 116. The MAC value may be computed by applying a MAC algorithm with the secret key SK_{MAC} to the session identity S_{ID} (as received from CS 116 at step 2), the charging station 116's identity CS_{ID} and the challenge value (as received from CS 116 at step 2). The MAC value is then signed using the PKI-Private key associated with CSMS 115. CSMS 115 then sends the signed MAC value to EV 105 at step 3.

EV 105 first verifies the authenticity of the signature of the signed MAC value received from CSMS 115 using a PKI-Public key associated with CSMS 115. Upon successfully authenticating the signed MAC value, the MAC value is then sent by EV 105 to CS 116 at step 4 using the CAN cable.

CS 116 then verifies the MAC value received from EV 105 using the key SK_{MAC} that was pre-shared between CS 116 and CSMS 115. The verification may be performed by CS 116 computing a MAC value that is then compared with the MAC value received from EV 105. This is done by applying a MAC algorithm with the secret key SK_{MAC} to the session identity S_{ID}, CS 116's identity CS_{ID} and the challenge value. If the MAC value computed by CS 116 matches the MAC value received from EV 105, this means that the EV 105 plugged into CS 116 has been successfully authenticated and hence the charging will start. The charging occurs at step 5.

At the end of the charging session, meter readings will be signed by EV 105 using the group secret key GSK_{VID} and sent to CSMS 115 as authentication device signed meter readings. CSMS 115 will further sign these authentication device signed meter reading using the CSMS's PKI-Private Key and send the further-authentication device signed meter reading to the CSO/EMO. The CSO/EMO then verifies the further- authentication device signed meter reading using a PKI-Public key associated with CSMS 115, rather than the CS's signature on the received authentication device meter reading. The CSO/EMO then verifies the EV 105's group secret signature GSK_{VID} on the authentication device signed-meter reading and being the group owner it can then obtain the identity of signer EV for billing purposes.

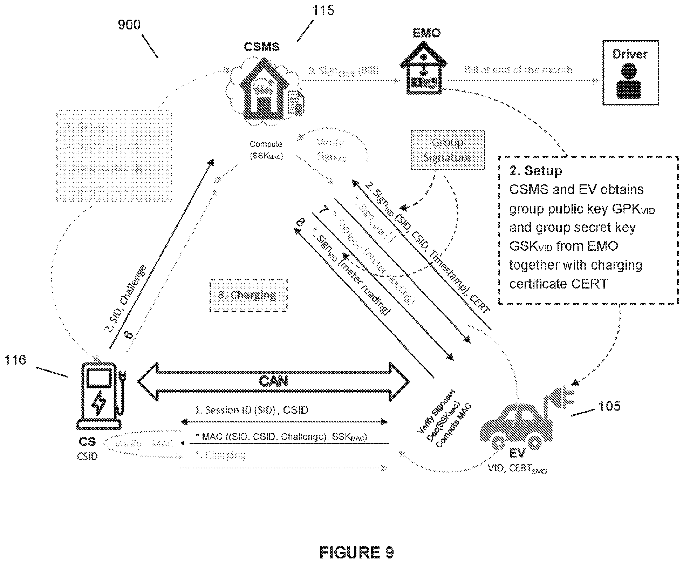

Figure 9 illustrates the application of the fourth embodiment of the invention to a Secure Electric Vehicle (EV) Plug-and-Charge Communication Protocol whereby the credential is computed at the EV, i.e. the second embodiment of the invention. Prior to charging EV 105, EV 105 having an identity V_{ID} or a charging identity will first obtain a signed charging contract certificate from a CSO/EMO associated with CSMS 115 together with a group secret key GSK_{VID} corresponding to the charging contract certificate whereby the group secret key GSK_{VID} is associated with the group public key and both secret and public keys are are associated with a group to which the EV and the CSMS belong to.

CS 116 which has an identity CS_{ID} and CSMS 115 will both have their associated long term Public-Key-Infrastructure (PKI) public and private keys and would have been provided with the corresponding signed certificates. The steps described above are illustrated as Setup-steps 1 and 2 in Figure 9.

When a charging cable from CS 116 is plugged into EV 105, the charging communication protocol illustrated in system 900 will begin. EV 105 will transmit its charging identity to CS 116. In embodiments of the invention, EV 105 may instead transmit a session identity (S_{Id}) to CS 116 and CS 116 will provide its identity CS_{ID} to EV 105 using a Controller Area Network (CAN) cable. This takes place at step 1.

At step 2, EV 105 will generate and send an authentication device signed identity message together with its charging contract certificate, CERT, to CSMS 115. The authentication device signed identity message is generated based on the session identity S_{ID} and the charging station identity CS_{ID} and is signed using the group secret key GSK_{VID}. In embodiments of the invention, the authentication device signed identity message may also contain a timestamp of the message or any other similar information without departing from the invention. Simultaneously, at step 2, CSMS 115 will also receive the session identity of EV 105 S_{ID} and a challenge value for the EV 105 from CS 116.

CSMS 115 will verify the authentication device signed identity message and charging contract certificate received from EV 105 using the authentication information associated with the charging contract certificate, i.e. using the group public key, GPK_{VID}. After successfully verifying the authentication device signed identity message, CSMS 115 will then compute a shared secret key SSK_{MAC} for both EV 105 and CS 116.

The shared secret SSK_{MAC} is then encrypted by CSMS 115 using the long term PKI-public key of EV 105 and together with the challenge value it received from CS 116 in step 2, these two variables are then signed using a PKI-Private key associated with CSMS 115 to produce CSMS signed message. The CSMS signed message is then transmitted to EV 105.

In this embodiment, EV 105 doesn't have individual long-term PKI-Public key to encrypt shared secret key SSK_{MAC} for EV 105 but only group public key which cannot be used for encryption. Hence, instead of using the PKI keys to encrypt the shared secret key SSK_{MAC}, CSMS 115 may pre-establish session keys with EV 105 and with CS 116 respectively and use these session keys to encrypt the shared secret key SSK_{MAC}. In this embodiment, EV 105 and CS 116 will then decrypt the encrypted shared secret key SSK_{MAC} using their respective session keys.

CS 116, however, has a long-term PKI-public key, so the shared secret key SSK_{MAC} for CS 116 can then be encrypted by CSMS 115 using the long term PKI-public key of the CS 116 and is signed using a PKI-Private key associated with CSMS 115 to produce a CSMS signed shared secret. The CSMS signed shared secret is then transmitted to CS 116. Whereas the CSMS 115 may pre-establish a session key with EV 105 and use this session keys to encrypt the shared secret key SSK_{MAC} for EV 105. In this embodiment, EV 105 will decrypt the encrypted shared secret key SSK_{MAC} using its session key whereas the CS 116 obtains the shared secret key SSK_{MAC} by decrypting using its own PKI-Private key.

Once EV 105 and CS 116 both have obtained the shared secret key SSK_{MAC}, EV 105 then uses this shared secret key SSK_{MAC} to compute the Message Authentication Code (MAC) value that is used by CS 116 to authenticate communications with EV 105. The MAC value may be computed by applying a MAC algorithm with the shared secret key SSK_{MAC} to the session identity S_{ID} (as generated at step 1), the charging station 116's identity CS_{ID} and the challenge value (as received from CS 116 at step 3). The MAC value is then sent using the CAN cable to CS 116 at step 4.

CS 116 then verifies the MAC value received from EV 105 using the shared secret key SSK_{MAC}. The verification may be performed by CS 116 computing a MAC value that is then compared with the MAC value received from EV 105. This is done by applying a MAC algorithm with the shared secret key SSK_{MAC} to the session identity S_{ID}, CS 116's identity CS_{ID} and the challenge value. If the MAC value computed by CS 116 matches the MAC value received from EV 105, this means that the EV 105 plugged into CS 116 has been successfully authenticated and hence the charging will start. The charging occurs at step 5.

At the end of the charging session, CS 116 signs meter readings using a PKI-Private key associated with CS 116 and sends the CS signed meter readings to CSMS 115 at step 6. CSMS 115 then authenticates the CS signed meter readings using a PKI-Public key associated with CS 116 and once authenticated; signs the meter reading using a PKI-Private key associated with CSMS 115. The new CSMS signed meter reading is then sent to EV 105 for its record at step 7 and to a charging spot operator (CSO) for billing purposes.

In accordance with embodiments of the invention, the CSMS signed meter reading received by EV 105 may be authenticated using a PKI-Public key associated with CSMS 115. The meter readings may then be further signed using the group secret key GSK_{VID} by EV 105 and once signed, be sent back to CSMS 115 as authentication device signed meter readings for further processing at step 8. The meter readings may then be forwarded onto the CSO/EMO by CSMS 115 to be recorded at the CSO/EMO once validated by CSMS 115 whereby the CSO/EMO authenticates the received CSMS signed meter readings using the group public key GPK_{VID} and the PKI-Public key associated with CSMS 115.

In other embodiments of the invention, the step of computing the MAC value may be replaced by the step of computing a Hash-based Message Authentication Code (HMAC) value instead. A HMAC value may be calculated by applying a cryptographic hash function together with a secret cryptographic key to a message that is to be hashed. In further embodiments of this invention, the cryptographic hash function may comprise algorithm such as SHA-256 or SHA-3.

The above is a description of embodiments of a system and process in accordance with the present invention as set forth in the following claims.

## Claims

1. A system for authenticating communication, comprising an authentication device, a charging station, CS, module (116) and a charging station management server, CSMS (115), wherein the authentication device comprises:
a processor; and
a non-transitory media readable by the processor, the non-transitory media storing instructions that when executed by the processor, cause the processor to:
transmit a charging identity associated with the authentication device to the CS module (116);
and **characterised in that** the processor is caused to:
transmit an authentication device signed identity message and a certificate, CERT, to the CSMS (115), wherein the signed identity message is generated based on the charging identity and a charging station identity CSId associated with the CS module (116), the authentication device signed identity message and the CERT are verified by the CSMS (115) using a public key PSK_{VID} that is associated with a secret key SK_{VID} corresponding to the CERT;
receive a CSMS signed message from the CSMS (115), wherein the CSMS signed message includes a challenge value, wherein the challenge value was provided to the CSMS (115) by the CS module (116);
send a Message Authentication Code, MAC, value to the CS module (116) after the CSMS signed message has been authenticated, wherein the MAC value is computed according to the challenge value from the CSMS signed message;
receive a CSMS signed meter reading from the CSMS (115) after the vehicle associated with the authentication device has finished charging , wherein the charging is started after the MAC value has been validated by the CS module (116), wherein the meter reading was provided to the CSMS (115) by the CS module (116);
transmit an authentication device signed meter reading to the CSMS (115) after the CSMS signed meter reading has been authenticated.

2. The system according to claim 1 wherein the charging identity comprises an identity VId associated with the authentication device.

3. The system according to any one of claims 1 or 2 wherein the authentication device signed identity message is signed using the secret key SK_{VID}, whereby the secret key SK_{VID} is provided to the authentication device by the CSMS (115).

4. The system according to claim 1 wherein the charging identity comprises a session identity SId associated with the authentication device.

5. The system according to claim 4 wherein the authentication device signed identity message is signed using a group secret key GSK_{VID}.

6. The system according to any one of claims 1 to 5 wherein the CSMS signed message comprises the MAC value that is generated based on the challenge value, the charging identity, the charging station identity CSId and by using a secret key SK_{MAC} pre-shared between the CSMS (115) and the CS module (116).

7. The system according to any one of claims 2 to 5 wherein the CSMS signed message comprises an encrypted shared secret key SSK_{MAC} and the challenge value, the shared secret key SSK_{MAC} being computed by the CSMS (115).

8. A method for for authenticating communications between an authentication device, a charging station, CS, module (116) and a charging station management server, CSMS (115), the method comprising:
transmitting, by the authentication device, a charging identity associated with the authentication device to the CS module (116);
and **characterised in that** it comprises:
transmitting, by the authentication device, an authentication device signed identity message and a certificate, CERT, to the CSMS (115), wherein the signed identity message is generated based on the charging identity and a charging station identity CSId associated with the CS module (116), the authentication device signed identity message and the CERT are verified by the CSMS (115) using a public key PSK_{VID} that is associated with a secret key SK_{VID} corresponding to the CERT;
receiving, by the authentication device, a CSMS signed message from the CSMS (115), wherein the CSMS signed message includes a challenge value, wherein the challenge value was provided to the CSMS (115) by the CS module (116);
sending, by the authentication device, a Message Authentication Code, MAC, value to the CS module (116) after the CSMS signed message has been authenticated, wherein the MAC value is computed according to the challenge value from the CSMS signed message; receiving, by the authentication device, a CSMS signed meter reading from the CSMS (115) after a vehicle associated with the authentication device has finished charging, wherein the charging is started after the MAC value has been validated by the CS module (116), wherein the meter reading was provided to the CSMS (115) by the CS module (116);
transmitting, by the authentication device, an authentication device signed meter reading to the CSMS (115) after the CSMS signed meter reading has been authenticated.

9. The method according to claim 8 wherein the charging identity comprises an identity VId associated with the authentication device.

10. The method according to any one of claims 8 or 9 wherein the authentication device signed identity message is signed using the secret key SK_{VID}.

11. The method according to claim 8 wherein the charging identity comprises a session identity SId associated with the authentication device.

12. The method according to claim 11 wherein the authentication device signed identity message is signed using a group secret key GSK_{VID}.

13. The method according to any one of claims 8 to 12 wherein the CSMS signed message comprises the MAC value that is generated based on the challenge value, the charging identity, the charging station identity CSId and by using a secret key SK_{MAC} pre-shared between the CSMS (115) and the CS module (116).

14. The method according to any one of claims 9 to 12 wherein the CSMS signed message comprises an encrypted shared secret key SSK_{MAC} and the challenge value, the shared secret key SSK_{MAC} being computed by the CSMS (115).

## Patentansprüche

1. System zum Authentifizieren einer Kommunikation, umfassend eine Authentifizierungsvorrichtung, ein Ladestations- bzw. CS-Modul (116) und einen Ladestationsverwaltungsserver bzw. CSMS (115), wobei die Authentifizierungsvorrichtung Folgendes umfasst:
einen Prozessor; und
ein nicht-flüchtiges Medium, das durch den Prozessor gelesen werden kann, wobei das nicht-flüchtige Medium Anweisungen speichert, die bei Ausführung durch den Prozessor bewirken, dass der Prozessor Folgendes durchführt:
Übertragen einer mit der Authentifizierungsvorrichtung assoziierten Ladeidentität an das CS-Modul (116);
und **dadurch gekennzeichnet, dass** bewirkt wird, dass der Prozessor Folgendes durchführt:
Übertragen einer durch die Authentifizierungsvorrichtung signierten Identitätsnachricht und eines Zertifikats bzw. CERT, an den CSMS (115), wobei die signierte Identitätsnachricht basierend auf der Ladeidentität und einer mit dem CS-Modul (116) assoziierten Ladestationsidentität bzw. CSId erzeugt wird, die durch die Authentifizierungsvorrichtung signierte Identitätsnachricht und das CERT durch den CSMS (115) unter Verwendung eines öffentlichen Schlüssels PSK_{VID}, der mit einem dem CERT entsprechenden geheimen Schlüssel SK_{VID} assoziiert ist, verifiziert werden;
Empfangen einer durch den CSMS signierten Nachricht von dem CSMS (115), wobei die durch den CSMS signierte Nachricht einen Challenge-Wert beinhaltet, wobei der Challenge-Wert dem CSMS (115) durch das CS-Modul (116) bereitgestellt wurde;
Senden eines Nachrichtenauthentifizierungscode- bzw. MAC-Werts an das CS-Modul (116) nach Authentifizierung der durch den CSMS signierten Nachricht, wobei der MAC-Wert gemäß dem Challenge-Wert aus der durch den CSMS signierten Nachricht berechnet wird;
Empfangen einer durch den CSMS signierten Zählerablesung von dem CSMS (115), nachdem das mit der Authentifizierungsvorrichtung assoziierte Fahrzeug einen Ladevorgang beendet hat, wobei der Ladevorgang beginnt, nachdem der MAC-Wert durch das CS-Modul (116) validiert wurde, wobei die Zählerablesung dem CSMS (115) durch das CS-Modul (116) bereitgestellt wurde;
Übertragen einer durch die Authentifizierungsvorrichtung signierten Zählerablesung an den CSMS (115) nach Authentifizierung der durch den CSMS signierten Zählerablesung.

2. System nach Anspruch 1, wobei die Ladeidentität eine mit der Authentifizierungsvorrichtung assoziierte Identität VId umfasst.

3. System nach einem der Ansprüche 1 oder 2, wobei die durch die Authentifizierungsvorrichtung signierte Identitätsnachricht unter Verwendung des geheimen Schlüssels SK_{VID} signiert ist, wobei der geheime Schlüssel SK_{VID} der Authentifizierungsvorrichtung durch den CSMS (115) bereitgestellt wird.

4. System nach Anspruch 1, wobei die Ladeidentität eine mit der Authentifizierungsvorrichtung assoziierte Sitzungsidentität SId umfasst.

5. System nach Anspruch 4, wobei die durch die Authentifizierungsvorrichtung signierte Identitätsnachricht unter Verwendung eines geheimen Gruppenschlüssels GSK_{VID} signiert ist.

6. System nach einem der Ansprüche 1 bis 5, wobei die durch den CSMS signierte Nachricht den MAC-Wert umfasst, der basierend auf dem Challenge-Wert, der Ladeidentität, der Ladestationsidentität CSId und durch Verwenden eines geheimen Schlüssels SK_{MAC}, der vorab zwischen dem CSMS (115) und dem CS-Modul (116) ausgetauscht wurde, erzeugt wird.

7. System nach einem der Ansprüche 2 bis 5, wobei die durch den CSMS signierte Nachricht einen verschlüsselten gemeinsam genutzten geheimen Schlüssel SSK_{MAC} und den Challenge-Wert umfasst, wobei der gemeinsam genutzte geheime Schlüssel SSK_{MAC} durch den CSMS (115) berechnet wird.

8. Verfahren zum Authentifizieren von Kommunikationen zwischen einer Authentifizierungsvorrichtung, einem Ladestations- bzw. CS-Modul (116) und einem Ladestationsverwaltungsserver bzw. CSMS (115), wobei das Verfahren Folgendes umfasst:
Übertragen, durch die Authentifizierungsvorrichtung, einer mit der Authentifizierungsvorrichtung assoziierten Ladeidentität an das CS-Modul (116);
und **dadurch gekennzeichnet, dass** es Folgendes umfasst:
Übertragen, durch die Authentifizierungsvorrichtung, einer durch die Authentifizierungsvorrichtung signierten Identitätsnachricht und eines Zertifikats bzw. CERT, an den CSMS (115), wobei die signierte Identitätsnachricht basierend auf der Ladeidentität und einer mit dem CS-Modul (116) assoziierten Ladestationsidentität bzw. CSId erzeugt wird, die durch die Authentifizierungsvorrichtung signierte Identitätsnachricht und das CERT durch den CSMS (115) unter Verwendung eines öffentlichen Schlüssels PSK_{VID}, der mit einem dem CERT entsprechenden geheimen Schlüssel SK_{VID} assoziiert ist, verifiziert werden;
Empfangen, durch die Authentifizierungsvorrichtung, einer durch den CSMS signierten Nachricht von dem CSMS (115), wobei die durch den CSMS signierte Nachricht einen Challenge-Wert beinhaltet, wobei der Challenge-Wert dem CSMS (115) durch das CS-Modul (116) bereitgestellt wurde;
Senden, durch die Authentifizierungsvorrichtung, eines Nachrichtenauthentifizierungscode- bzw. MAC-Werts an das CS-Modul (116) nach Authentifizierung der durch den CSMS signierten Nachricht, wobei der MAC-Wert gemäß dem Challenge-Wert aus der durch den CSMS signierten Nachricht berechnet wird;
Empfangen, durch die Authentifizierungsvorrichtung, einer durch den CSMS signierten Zählerablesung von dem CSMS (115), nachdem das mit der Authentifizierungsvorrichtung assoziierte Fahrzeug einen Ladevorgang beendet hat, wobei der Ladevorgang beginnt, nachdem der MAC-Wert durch das CS-Modul (116) validiert wurde, wobei die Zählerablesung dem CSMS (115) durch das CS-Modul (116) bereitgestellt wurde;
Übertragen, durch die Authentifizierungsvorrichtung, einer durch die Authentifizierungsvorrichtung signierten Zählerablesung an den CSMS (115) nach Authentifizierung der durch den CSMS signierten Zählerablesung.

9. Verfahren nach Anspruch 8, wobei die Ladeidentität eine mit der Authentifizierungsvorrichtung assoziierte Identität VId umfasst.

10. Verfahren nach einem der Ansprüche 8 oder 9, wobei die durch die Authentifizierungsvorrichtung signierte Identitätsnachricht unter Verwendung des geheimen Schlüssels SK_{VID} signiert wird.

11. Verfahren nach Anspruch 8, wobei die Ladeidentität eine mit der Authentifizierungsvorrichtung assoziierte Sitzungsidentität SId umfasst.

12. Verfahren nach Anspruch 11, wobei die durch die Authentifizierungsvorrichtung signierte Identitätsnachricht unter Verwendung eines geheimen Gruppenschlüssels GSK_{VID} signiert wird.

13. Verfahren nach einem der Ansprüche 8 bis 12, wobei die durch den CSMS signierte Nachricht den MAC-Wert umfasst, der basierend auf dem Challenge-Wert, der Ladeidentität, der Ladestationsidentität CSId und durch Verwenden eines geheimen Schlüssels SK_{MAC}, der vorab zwischen dem CSMS (115) und dem CS-Modul (116) ausgetauscht wurde, erzeugt wird.

14. Verfahren nach einem der Ansprüche 9 bis 12, wobei die durch den CSMS signierte Nachricht einen verschlüsselten gemeinsam genutzten geheimen Schlüssel SSK_{MAC} und den Challenge-Wert umfasst, wobei der gemeinsam genutzte geheime Schlüssel SSK_{MAC} durch den CSMS (115) berechnet wird.

## Revendications

1. Système pour authentifier une communication, comprenant un dispositif d'authentification, un module de station de recharge, CS, (116) et un serveur de gestion de station de recharge, CSMS, (115), dans lequel le dispositif d'authentification comprend :
un processeur ; et
un support non transitoire lisible par le processeur, le support non transitoire stockant des instructions qui, lorsqu'elles sont exécutées par le processeur, font en sorte que le processeur :
transmette une identité de recharge, associée au dispositif d'authentification, au module de CS (116) ;
et **caractérisé en ce qu'**il est fait en sorte que le processeur :
transmette un message d'identité signé de dispositif d'authentification et un certificat, CERT, au CSMS (115), dans lequel le message d'identité signé est généré sur la base de l'identité de recharge et d'une identité de station de recharge CSId associée au module de CS (116), le message d'identité signé de dispositif d'authentification et le CERT sont vérifiés par le CSMS (115) en utilisant une clef publique PSK_{VID} qui est associée à une clef secrète SK_{VID} correspondant au CERT ;
reçoive un message signé de CSMS à partir du CSMS (115), dans lequel le message signé de CSMS inclut une valeur d'épreuve, dans lequel la valeur d'épreuve a été fournie au CSMS (115) par le module de CS (116) ;
envoie une valeur de code d'authentification de message, MAC, au module de CS (116) après que le message signé de CSMS a été authentifié, dans lequel la valeur de MAC est calculée selon la valeur d'épreuve provenant du message signé de CSMS ;
reçoive une lecture de compteur signée de CSMS à partir du CSMS (115) après que le véhicule associé au dispositif d'authentification a fini la recharge, dans lequel la recharge est commencée après que la valeur de MAC a été validée par le module de CS (116), dans lequel la lecture de compteur a été fournie au CSMS (115) par le module de CS (116) ;
transmette une lecture de compteur signée de dispositif d'authentification au CSMS (115) après que la lecture de compteur signée de CSMS a été authentifiée.

2. Système selon la revendication 1, dans lequel l'identité de recharge comprend une identité VId associée au dispositif d'authentification.

3. Système selon l'une quelconque des revendications 1 ou 2, dans lequel le message d'identité signé de dispositif d'authentification est signé en utilisant la clef secrète SK_{VID}, moyennant quoi la clef secrète SK_{VID} est fournie au dispositif d' authentification par le CSMS (115).

4. Système selon la revendication 1, dans lequel l'identité de recharge comprend une identité de session SId associée au dispositif d'authentification.

5. Système selon la revendication 4, dans lequel le message d'identité signé de dispositif d'authentification est signé en utilisant une clef secrète de groupe GSK_{VID}.

6. Système selon l'une quelconque des revendications 1 à 5, dans lequel le message signé de CSMS comprend la valeur de MAC qui est générée sur la base de la valeur d'épreuve, de l'identité de recharge, de l'identité de station de recharge CSId et en utilisant une clef secrète SK_{MAC} préalablement partagée entre le CSMS (115) et le module de CS (116).

7. Système selon l'une quelconque des revendications 2 à 5, dans lequel le message signé de CSMS comprend une clef secrète partagée chiffrée SSK_{MAC} et la valeur d'épreuve, la clef secrète partagée SSK_{MAC} étant calculée par le CSMS (115).

8. Procédé pour authentifier des communications entre un dispositif d'authentification, un module de station de recharge, CS, (116) et un serveur de gestion de station de recharge, CSMS, (115), le procédé comprenant :
la transmission, par le dispositif d'authentification, d'une identité de recharge associée au dispositif d'authentification au module de CS (116) ;
et **caractérisé en ce qu'**il comprend :
la transmission, par le dispositif d'authentification, d'un message d'identité signé de dispositif d'authentification et un certificat, CERT, au CSMS (115), dans lequel le message d'identité signé est généré sur la base de l'identité de recharge et d'une identité de station de recharge CSId associée au module de CS (116), le message d'identité signé de dispositif d'authentification et le CERT sont vérifiés par le CSMS (115) en utilisant une clef publique PSK_{VID} qui est associée à une clef secrète SK_{VID} correspondant au CERT ;
la réception, par le dispositif d'authentification, d'un message signé de CSMS à partir du CSMS (115), dans lequel le message signé de CSMS inclut une valeur d'épreuve, dans lequel la valeur d'épreuve a été fournie au CSMS (115) par le module de CS (116) ;
l'envoi, par le dispositif d'authentification, d'une valeur de code d'authentification de message, MAC, au module de CS (116) après que le message signé de CSMS a été authentifié, dans lequel la valeur de MAC est calculée selon la valeur d'épreuve provenant du message signé de CSMS ;
la réception, par le dispositif d'authentification, d'une lecture de compteur signée de CSMS à partir du CSMS (115) après qu'un véhicule associé au dispositif d'authentification a fini la recharge, dans lequel la recharge est commencée après que la valeur de MAC a été validée par le module de CS (116), dans lequel la lecture de compteur a été fournie au CSMS (115) par le module de CS (116) ;
la transmission, par le dispositif d'authentification, d'une lecture de compteur signée de dispositif d'authentification au CSMS (115) après que la lecture de compteur signée de CSMS a été authentifiée.

9. Procédé selon la revendication 8, dans lequel l'identité de recharge comprend une identité VId associée au dispositif d'authentification.

10. Procédé selon l'une quelconque des revendications 8 ou 9, dans lequel le message d'identité signé de dispositif d'authentification est signé en utilisant la clef secrète SK_{VID}.

11. Procédé selon la revendication 8, dans lequel l'identité de recharge comprend une identité de session SId associée au dispositif d' authentification.

12. Procédé selon la revendication 11, dans lequel le message d'identité signé de dispositif d'authentification est signé en utilisant une clef secrète de groupe GSK_{VID}.

13. Procédé selon l'une quelconque des revendications 8 à 12, dans lequel le message signé de CSMS comprend la valeur de MAC qui est générée sur la base de la valeur d'épreuve, de l'identité de recharge, de l'identité de station de recharge CSId et en utilisant une clef secrète SK_{MAC} préalablement partagée entre le CSMS (115) et le module de CS (116).

14. Procédé selon l'une quelconque des revendications 9 à 12, dans lequel le message signé de CSMS comprend une clef secrète partagée chiffrée SSK_{MAC} et la valeur d'épreuve, la clef secrète partagée SSK_{MAC} étant calculée par le CSMS (115).
